(19)

Europäisches
Patentamt
European
Patent Office
Office européen
des brevets

(11) **EP 4 343 622 A1**

(12) **EUROPEAN PATENT APPLICATION**

(43) Date of publication:
**27.03.2024 Bulletin 2024/13**

(21) Application number: **23151123.9**

(22) Date of filing: **11.01.2023**

(51) International Patent Classification (IPC):
**G06N 3/045** (2023.01)          **G06N 3/084** (2023.01)
**G06F 18/211** (2023.01)

(52) Cooperative Patent Classification (CPC):
**G06N 3/045; G06F 18/211; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022   NL 2033145
30.12.2022   NL 2033879**

(71) Applicant: **NavInfo Europe B.V.
5657 DB Eindhoven (NL)**

(72) Inventors:
• **BHAT, Prashant Shivaram
5657 DB Eindhoven (NL)**
• **ARANI, Elahe
5657 DB Eindhoven (NL)**
• **ZONOOZ, Bahram
5657 DB Eindhoven (NL)**

(74) Representative: **van Breda, Jacobus
Octrooibureau Los & Stigter B.V.
P.O. Box 20052
1000 HB Amsterdam (NL)**

(54) **A COMPUTER-IMPLEMENTED METHOD FOR CONTINUAL LEARNING OF MULTIPLE TASKS SEQUENTIALLY USING A DEEP NEURAL NETWORK TOGETHER WITH A PLURALITY OF TASK-ATTENTION MODULES**

(57)    A computer-implemented method for continual learning of multiple tasks sequentially using a deep neural network wherein the method comprises providing a plurality of task-attention modules, wherein the method comprises: processing sensory inputs using said the deep neural network to build a first representation space of fixed capacity for representations (common representation space);admitting only task-relevant information from said first representation space into a second representation space (global workspace) different from the first representation space using said plurality of task-attention modules, and wherein each task-attention module of the plurality of task-attention modules is specialized towards a different task.

EP 4 343 622 A1

**Description**

The present invention relates to continual learning using a deep neural network.

Deep neural networks are normally required to learn multiple tasks sequentially and are exposed to non-stationary data distributions. Throughout their lifespan, such systems need to acquire new skills without compromising the previously learned knowledge. However, continual learning (CL) over multiple tasks violates the i.i.d (independent and identically distributed) assumption on the underlying data leading to overfitting on the current task and catastrophic forgetting [1, 2, 4] of previous tasks. Such catastrophic forgetting occurs due to what is known as the 'stability-plasticity dilemma'. That is to say, the extent to which a system must be stable to retain consolidated knowledge and plastic to assimilate novel information [9] mean that stable systems tend to have difficulty or even a general inability to learn new tasks, whereas plastic systems learn new tasks at the expense of known tasks and thus 'forget' old tasks.

As a consequence of such forgetting, the performance on previous tasks often drops significantly, in the worst case, the previously learned information is completely overwritten by the new one [1], making such loss of task performance fairly catastrophic indeed. That is to say, the definition of catastrophic forgetting is the significant loss of task performance by a neural network, rendering said neural network unsuitable for the reliable performance of the effected task or tasks. To partially prevent catastrophic forgetting can further be understood to reduce the effects or incidence of catastrophic forgetting in continual learning. The problem of catastrophic forgetting manifests in various domains including continual learning, multitask learning, and supervised learning under domain shift. On the other hand, humans appear to excel at continual learning by incrementally acquiring, consolidating and transferring knowledge across multitude of tasks [6]. Although forgetting in humans does occur, learning novel information rarely results in any catastrophic forgetting of consolidated knowledge [2], and thus the inability to perform previously known skills. Continual learning in humans is governed by relatively rich set of neurophysiological processes which harbor different types of representation spaces and conscious processing integrates them in a coherent way. To explain the continual learning ability in humans several Global Workspace Theory (GWT) has been posited. GWT [10] puts forward that one such knowledge space is a common representation space of fixed capacity from which the information is selected, maintained, and shared with the rest of the human brain.

Continual learning over a sequence of tasks however has been a long-standing challenge since learning a new task causes large weights changes in DNNs resulting in overfitting on the current task and catastrophic forgetting of the older tasks [1, 2] . Similar to experience rehearsal in the brain, early works attempted to address catastrophic forgetting through Experience-Rehearsal (ER) [14] by explicitly storing and replaying previous task samples alongside current task samples. Gradient Episodic Memory (GEM) [11] and its light weight counterpart Averaged-GEM (A-GEM) [12] build on top of ER and insert optimization constraints that encourage positive backward transfer. iCaRL [13] uses a self-distillation loss term to prevent representation drift and trains a nearest-mean-of- exemplars classifier using buffered samples. Replay-based approaches (e.g. [11-14]) do not perform well under low-buffer regimes and longer task sequences as their performance is commensurate with the buffer size. To preserve the information pertaining to previous tasks better, several methods leverage soft-targets [5], self-supervised learning [7] and dual-memory systems [3, 8].

In addition to experience rehearsal, continual learning in the brain is mediated by a self-regulated neurogenesis that scale up the number of new memories that can be encoded and stored without catastrophic forgetting [15]. Neurogenesis also plays a pivotal role in the growth and restructuring necessary to accommodate new skills in the early stages of the brain development. Similarly in DNNs, parameter-isolation methods [16-18] loosely mimic an extreme case of neurogenesis by introducing a new set of parameters for each task thereby mitigating interference between tasks. Progressive neural networks (PNNs) [17] instantiates a new sub-network for each task with lateral connections to the previously learned frozen models. Although parameter isolation reduces catastrophic forgetting, these approaches are not scalable due to addition of large number of parameters for each task.

Continual learning over a sequence of tasks is especially challenging for DNNs as the data pertaining to previous tasks is scarcely available. DNNs have a tendency to forget previous task information when learning multiple tasks sequentially, commonly referred to as catastrophic forgetting. Although keeping DNN's weights stable mitigates forgetting, too much stability prevents the model from learning new tasks. Experience-Replay (ER) has been extensively used in the literature to address the problem of catastrophic forgetting. However, replay-based methods show strong performance only in presence of large buffer size and fail to perform well under low-buffer regimes and longer task sequences.

Accordingly, the present invention proposes a DNN based CL method that encompasses task-attention modules (TAMs) to admit only the task-relevant information from the common representation space into the global workspace. These 'lightweight' TAMs capture task-relevant information and reduce task-interference thereby further mitigating catastrophic forgetting in continual learning.

More specifically according to a first aspect of the invention there is provided a computer-implemented method for continual learning of multiple tasks sequentially using a deep neural network wherein the method comprises providing a plurality of task-attention modules, wherein the method comprises: - processing sensory inputs, such as visual data, using said the deep neural network to build a first representation space of fixed capacity for representations, such as a common representation space of fixed capacity; - admitting only task-relevant information from said first representation space into a second representation space, such as a global work-space different from the first representation space, using said plurality of task-attention modules, and wherein each task-attention module of the plurality of task-attention modules is specialized towards a different task. The above method serves to alleviate the catastrophic forgetting. This method enables learning task-relevant information in TAMs thereby significantly mitigating catastrophic forgetting. It is noted that the deep neural network in this example is artificial neural network for perception and understanding and wherein the method further uses another artificial neural network as a classifier for representing classes belonging to the plurality of tasks for action and learning, and wherein optionally said classifier builds the second representation space.

In one example said plurality of task-attention modules form a task-specific bottleneck between said first representation space and second representation space.

In yet another example, as part of the first aspect of the invention, the method may be found to comprise the step of maximizing pairwise discrepancy loss between output representations of the plurality of task-attention modules. The person skilled in the art will appreciate that maximizing may be accomplished by using pairwise loss applied on softmax outputs of the TAMs. Other methods of maximizing are also possible. This encourages task-attention modules from specializing towards a more diverse range of tasks.

In extension of the previous example the method may further comprises: - identifying a task-attention module, among the plurality of task-attention modules, corresponding to a current task; and - updating, among the plurality of task-attention modules, only the gradients of the identified task-attention module. This beneficially avoids the overwriting previous task attention.

Additionally optional is having the identification of the task-attention module corresponding to the current task occur by inferring a task-identity of the current task. This usually allows the correct identification of a TAM for forming the bottleneck between the first and second representation spaces.

However, inferring a wrong TAM may result in a reduced task performance.

To prevent the mis-identification of a TAM the method may further comprise computing the mean-squared error between a feature from the first representation space and outputs of each of the task-attention modules of the plurality of task-attention modules, and wherein the task attention module with the lowest mean square error is identified as corresponding to the current task.

Lastly experience replay is beneficially provided for, wherein the method comprises: providing a memory buffer for storing sensory input samples; replaying stored sensory input images to the deep neural network; and applying cross-entropy loss and consistency regularization on said stored sensory input samples, once a task-attention module corresponding to the current task is identified.

According to a second aspect of the invention there is provided a data processing apparatus comprising means for carrying out the method of the first aspect.

According to a third aspect there is provided a computer program product comprising instructions which, when the program is executed by a computer, cause the computer to carry out the method of the first aspect. Such as provided on a non-transitory memory storage device.

According to a fourth aspect there is provided an at least partially autonomous driving system comprising at least one camera designed for providing a feed of input images, and a computer designed for classifying and/or detecting objects using a deep neural network, and wherein said deep neural network has been trained, or is actively being trained, using method according to the first aspect of the invention.

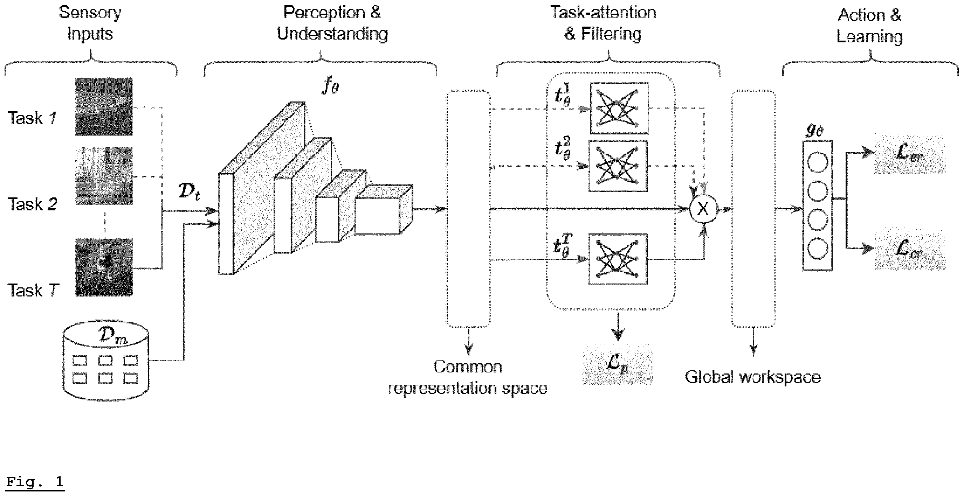

Hereinafter the invention is discussed in more detail in reference to Figure 1.

Figure 1 shows a schematic flow diagram for the method according to the invention. Herein the following reference sign refer to the following features:

$D_m$ is a memory buffer;
$D_t$ is a task specific distribution;
$f_\theta$ a deep neural network;
$g_\theta$ a classifier representing classes belonging to a plurality of tasks;
re is a task-attention module for a particular task
CRS is a common representation space
GW is a global workspace
SI is sensory inputs
PU stands for the portion of the diagram that concerns itself with perception and understanding;
TF stands for the portion of the diagram that concerns itself with task-attention and filtering AL stands for the portion of the diagram that concerns itself with action and learning.

**PRELIMINARY**

Continual learning consists of multiple sequential tasks t E {1, 2, .., T } in which the mode $\Phi_\theta$ is optimized on one task at a time. We consider a CL setting in which the continual learner solves one task at a time and knows which task to solve at any point in time. Each task is specified by a task-specific distribution $D_t$ with $(x_i, y_i)_{i=1}^N$ pairs. In this training paradigm, any two task-specific distributions are disjoint. The model $\Phi_\theta$ consists of a backbone network $f_\theta$ and a classifier $g_\theta$ representing classes belonging to all tasks. The learning objective under such a CL setting is to restrict the empirical risk of all seen tasks so far:

$$\mathcal{L}_{T_c} = \sum_{t=1}^{T_c} \mathop{\mathbb{E}}_{(x_i, y_i) \sim \mathcal{D}_t} \left[ \mathcal{L}_{ce}(\sigma(\Phi_\theta(x_i)), y_i) \right], \qquad (1)$$

where $L_{ce}$ is a cross-entropy loss and $T_c$ is the current task. Critically, if $\Phi_\theta$ is trained on each task only once in its lifetime without revisiting, such sequential learning results in large weight changes in $\Phi_\theta$ in the subsequent tasks leading to catastrophic forgetting of older tasks and over-fitting on the current task. To mitigate catastrophic for-getting in CL, we employ experience rehearsal along with consistency regularization through episodic replay. Central to our method are the Task-specific Attention Modules (TAMs) that attend to important features of the input. We define two representation spaces namely common representation space and global workspace that are spanned by mapping functions $M_f$: $R^{B,H,W,C} \to R^D$ and $M_{TAM}$: $R^D \to R^D$ where D denotes the dimension of output Euclidean space. $M_f$ is a set of possible functions that the encoder $f_\theta$ can learn whereas $M_{TAM}$ denotes a set of functions represented by TAMs. Wherever the terms common representation space and global workspace are read anywhere in this text, the terms can be replaced by first and second representation space respectively. The representation spaces are merely referred to as common or global for the skilled person's intuitive distinction and should not to be considered limiting indicators. We propose to use simple, under-complete autoencoders as task-specific attention modules that act as feature selectors. We describe each of these components in detail in the following sub-sections.

**EPISODIC REPLAY**

Experience rehearsal plays an important role in knowledge consolidation in the brain [19]. Likewise, to pre-serve the knowledge about previous tasks, the present invention seeks to approximate the past data distributions $D_{i \in \backslash\{1,2,..,T_c-1\backslash\}}$ through a memory buffer $D_m$ with reservoir sampling [20]. Each sample in $D_t$ has equal probability to be represented in the buffer $D_m$ and replacements are done randomly. At every iteration, we randomly sample from Dm and replay them alongside $D_t$. There-fore, the objective function in Equation 1 can be conveniently modified as follows:

$$\mathcal{L}_{er} = \mathcal{L}_{T_c} + \alpha \mathop{\mathbb{E}}_{(x_j, y_j) \sim \mathcal{D}_m} \left[ \mathcal{L}_{ce}(\sigma(\Phi_\theta(x_j)), y_j) \right], \qquad (2)$$

where $\alpha$ is a balancing parameter. Experience rehearsal improves stability commensurate with the ability of $D_m$ to ap-proximate past distributions. In scenarios where the buffer size is limited, CL model learns sample-specific features rather than capturing class/task-wide representative features, resulting in poor performance under low buffer regimes. As soft-targets carry more information per training sample than the hard targets, we therefore employ consistency regularization [5] to preserve previous task information better. We straightforwardly define consistency regularization with the expected Minkowski distance as follows:

$$\mathcal{L}_{cr} \triangleq \mathop{\mathbb{E}}_{(x_j, y_j, z_j) \sim D_m} \left\| \hat{z}_j - \Phi_\theta(x_j) \right\|_2 \qquad (3)$$

where $\hat{z}_j$ represents model's pre-softmax responses stored in the buffer.

**TASK-SPECIFIC ATTENTION MODULES**

Lifelong learning in the brain is mediated by the conscious processing of multiple representation spaces. The GWT provides a formal account of cognitive information access and posits that one such representation space is a common representation space of fixed capacity from which the information is selected, maintained, and shared with the rest of the human brain. During information access, the attention mechanism creates a communication bottleneck between representation space and global workspace, and admits only the task-relevant information into the global workspace. Such conscious processing could help the brain achieve systematic generalization and serve to resolve problems that could only be solved by multiple specialized modules.

In functional terms, GWT as a mere theory of human cognitive access appears to have several benefits when applied to continual learning using artificial neural networks: (i) the common representation space is largely a shared function, resulting in maximum re-usability across tasks, (ii) the attention mechanism can be interpreted as a task-specific policy for admitting behaviorally-relevant information thereby reducing interference between tasks, and (iii) multiple specialized attention modules enable solving more complex tasks which cannot be solved by a single specialized function. Therefore, we emphasize that emulating GWT in computational models can greatly reduce catastrophic forgetting in CL all the while leveraging maximum re-usability across tasks. This benefit within CL in artificial neural network models may itself serve as proof for GWT in humans.

Reminiscent of conscious information access proposed in GWT, we propose task-specific attention modules to capture task-relevant information in CL. The choice of these attention modules should be such that there is enough flexibility for them to capture the task-relevant information and are diverse enough to differentiate between tasks during inference while still rendering the CL model scalable in longer task sequences. To this end, we propose to use simple, undercomplete auto-encoders as TAMs in our method.

Each of these TAMs consist of two parts $\tau_\theta^i = \{\tau_\theta^{ie}, \tau_\theta^{is}\}$, where $\tau_\theta^{ie}$ acts as a feature extractor and $\tau_\theta^{is}$ as a feature selector. The feature extractor learns a low-dimensional subspace using a linear layer followed by ReLU activation. On the other hand, the feature selector learns task-specific attention using another linear layer followed by Sigmoid activation. The bottleneck in the proposed TAMs achieves twin objectives: It inhibits TAMs from reconstructing their own input while reducing the number of parameters required to learn task-relevant information. Akin to neurogenesis in the brain, TAMs encode and store task-specific attention while still being scalable to large number of tasks.

In order to effectively leverage functional space of TAMs, we seek to maximize pairwise discrepancy loss between output representations of the TAMs trained so far:

$$\mathcal{L}_p \triangleq \sum_{t=1}^{T_c-1} \mathbb{E}_{x \sim D_t} \left\| \sigma\left(\tau_\theta^{T_c}(r)\right) - \sigma\left(\tau_\theta^t(r)\right) \right\|_{p=1} \qquad (4)$$

where $r = f_\theta(x)$ is the representation in the common representation space. As stricter pairwise discrepancy might result in capacity saturation and reduce flexibility to learn new tasks, we employ softmax function $\sigma(.)$ while enforcing diversity among TAMs. Additionally, we update the gradients of only the current TAM $\tau_\theta^{T_c}$ to avoid overwriting previous task attention. Without Equation 4, multiple TAMs can be very similar, lessening their effectiveness as task-specific attention.

**PUTTING IT ALL TOGETHER**

The method consists of a CL model $\Phi_\theta = \|\{f_\theta \tau_\theta g_\theta\|\}$ where $f_\theta$ represents a feature extractor (e.g. ResNet-18), $\tau_\theta = \{\tau_\theta^t \forall t \leq T_c\}$ is a set of TAMs up to the current task and classifier $g_\theta$ represents classes belonging to all tasks. Analogous to common representational space proposed in GWT, we employ fθ as a common representational space to capture the sensory information $D_t$ from all the tasks sequentially. For each task, a new TAM is initialized that acts as a feature selector by attending to features important for the given task. The intuition behind placing the TAMs higher up in the layer hierarchy is as follows: Early layers of DNNs capture generic information while later layers capture task-specific information. Therefore, redundancy in the later layers is desirable to reduce catastrophic forgetting all the while maximizing the re-usability.

The goal of TAMs is to act as a task-specific bottleneck through which only the task-relevant in- formation is let through to global workspace. Specifically, during CL training, corresponding TAM learns transformation coefficients spaced on the task-identifier using current task data Dt. The transformation coefficients are then applied on the features from the common representation space using element-wise multiplication. Additionally, we enforce pairwise-discrepancy loss from Equation 4 to ensure diversity among TAMs. On the downside, since each TAM is associated with a specific task, inferring a wrong TAM for the test samples can result in a subpar performance on the test set.

In the brain, the information is not always consciously processed unless there is sufficient activation in the prefrontal region, resulting in an ignition event (Juliani et al., 2022). Analogously, we emulate the ignition event with a matching criterion using buffered samples from $D_m$. i.e. During training, for each buffered sample we infer the task-identity by computing mean-squared error between the feature from the common representation space and outputs of each of the TAMs seen so far. Within this method the computer would select the TAM with the lowest matching criterion as follows:

$$\underset{t \in 1,..,T_c}{\operatorname{argmin}} \ \|\tau_\theta^t(r_m) - r_m\|_2^2 \qquad (5)$$

where $r_m = f_\theta(x_m)$, $x_m \in D_m$. Once the right TAM is selected, we apply cross-entropy loss (Equation 2) and consistency regularization (Equation 3) on the buffered samples. As the CL model is now trained to select the appropriate TAM, we use the same criterion during the inference stage as well. We select the matching criterion as an ignition event for its simplicity and lack of additional trainable parameters. However, com- plex alternatives such as learning a policy using reinforcement learning, gating mechanism using Gumbel-softmax and prototype matching can also be explored in place of the matching criterion.

Other than $L_p$ (Equation 4), the method according to this example does not use any other objective on TAMs to constrain their learning. The final learning objective for the entire CL model is as follows:

$$\mathcal{L} \triangleq \mathcal{L}_{er} + \beta \, \mathcal{L}_{cr} - \lambda \, \mathcal{L}_p \qquad (6)$$

The proposed method is detailed in the Method flow as proposed below:

---

**Algorithm 1** Proposed Method

---

    **input:** Data streams $\mathcal{D}_t \ \forall \ t \in \{1, ..., T\}$, Model $\Phi_\theta = \{f_\theta, \tau_\theta, g_\theta\}$, $\tau_\theta = \{\}$
                Balancing factors $\alpha$, $\beta$ and $\lambda$, Memory buffer $\mathcal{D}_m = \{\}$

1: **for all** tasks $t \in \{1, 2, .., T\}$ **do**
2:      $\tau_\theta = \tau_\theta \ \cup \ \{\tau_\theta^t\}$
3:      **for** minibatch $\{x_i, y_i\}_{i=1}^B \in \mathcal{D}_t$ **do**
4:          $\mathcal{L}_{er} = 0$
5:          $r_i = f_\theta(x_i)$
6:          $\hat{r}_i = \tau_\theta^t(r_i) \otimes r_i$
7:          $\hat{y}_i = g_\theta(\hat{r}_i)$
8:          Compute $\mathcal{L}_{er} \mathrel{+}= \frac{1}{B}\sum_B \mathcal{L}_{ce}(\hat{y}_i, y_i)$     ⟶ Equation 2
9:          Compute $\mathcal{L}_p$     ⟶ Equation 4
10:          **if** $\mathcal{D}_m \neq \emptyset$ **then**
11:              **for** minibatch $\{x_j, y_j, z_j\}_{j=1}^B \in \mathcal{D}_m$ **do**
12:                  $r_j = f_\theta(x_j)$
13:                  $t = \underset{t \in 1,..,T_c}{\operatorname{argmin}} \ \|\tau_\theta^t(r_m) - r_m\|_2^2$     ⟶ Equation 5
14:                  $\hat{r}_j = \tau_\theta^t(r_j) \otimes r_j$
15:                  $\hat{y}_j = g_\theta(\hat{r}_j)$
16:              Compute $\mathcal{L}_{er} \mathrel{+}= \frac{\alpha}{B}\sum_B \mathcal{L}_{ce}(\hat{y}_j, y_j)$     ⟶ Equation 2
17:              Compute $\mathcal{L}_{cr}$     ⟶ Equation 3
18:          Compute $\mathcal{L} \triangleq \mathcal{L}_{er} + \beta \ \mathcal{L}_{cr} - \lambda \ \mathcal{L}_p$     ⟶ Equation 6
19:          Compute the gradients $\dfrac{\delta\mathcal{L}}{\delta\theta}$
20:          Update the model $\Phi_\theta$
21:          Update the memory buffer $\mathcal{D}_m$
22: **return** model $\Phi_\theta$

---

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed s strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

**Claims**

1. A computer-implemented method for at least partially preventing catastrophic forgetting in a continual learning of multiple tasks sequentially using a deep neural network (fe) for perception and understanding, wherein the method comprises providing a plurality of task-attention modules, and wherein the method further comprises:

   - processing sensory inputs using said deep neural network to build a first representation space of fixed capacity for representations;
   - admitting only task-relevant information from said first representation space into a second representation space different from the first representation space using said plurality of task-attention modules,

   wherein each task-attention module of the plurality of task-attention modules is specialized towards a different task, and wherein the method uses a classifier (ge) representing classes belonging to the plurality of tasks for action and learning, and wherein optionally said classifier builds the second representation space.

2. The method according to claim 1, wherein said plurality of task-attention modules form a task-specific bottleneck between said first representation space and second representation space corresponding to a current task for reducing task interference between the multiple tasks in said continual learning.

3. The method according to claim 1 or 2, comprising the step of:
   maximizing pairwise discrepancy loss between output representations of the plurality of task-attention modules.

4. The method according to claim 1, 2 or 3, comprising:

   - identifying a task-attention module, among the plurality of task-attention modules, corresponding to a current task;
   - updating, among the plurality of task-attention modules, only the gradients of the identified task-attention module.

5. The method according to claim 4, wherein the identification the task-attention module corresponding to the current task occurs by inferring a task-identity of the current task.

6. The method according to any one of claims 1-5, wherein the inference of task identity comprises computing a mean-squared error between a feature from the first representation space and outputs of each of the task-attention modules of the plurality of task-attention modules, and wherein the task attention module with the lowest mean square error is identified as corresponding to the current task.

7. The method according to any one of claims 4-6, wherein the method comprises:

   - providing a memory buffer for storing sensory input samples;
   - replaying stored sensory input images to the deep neural network; and
   - applying cross-entropy loss and consistency regularization on said stored sensory input samples, once a task-attention module corresponding to the current task is identified.

8. The method according to any one of claims 1-7, wherein each of the task-attention modules of the plurality of task-attention modules is used for feature extraction and used for feature selection.

9. A data processing apparatus comprising means for carrying out the method of any one of claims 1-8.

10. A computer program product comprising instructions which, when the program is executed by a computer, cause the computer to carry out the method of any one of claims 1-8.

11. An at least partially autonomous driving system comprising

at least one camera designed for providing a feed of input images, and a computer designed for classifying and/or detecting objects using a deep neural network, and
wherein said deep neural network has been trained, or is actively being trained, using the method according to any one of claims 1-8.

Fig. 1

Europäisches
Patentamt

European
Patent Office

Office européen
des brevets

# EUROPEAN SEARCH REPORT

Application Number

EP 23 15 1123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG ZHEN ET AL: "Continual Learning with Lifelong Vision Transformer", 2022 IEEE/CVF CONFERENCE ON COMPUTER VISION AND PATTERN RECOGNITION (CVPR), IEEE, 18 June 2022 (2022-06-18), pages 171-181, XP034196133, DOI: 10.1109/CVPR52688.2022.00027 * page 1 – page 3; figure 1 * | 1-11 | INV. G06N3/045 G06N3/084 G06F18/211 |
| A | US 2021/383158 A1 (SHIM DONGSUB [CA] ET AL) 9 December 2021 (2021-12-09) * paragraph [0041] – paragraph [0056] * | 11 | |

TECHNICAL FIELDS SEARCHED (IPC)

G06N
G06V
G06F

The present search report has been drawn up for all claims

| Place of search | Date of completion of the search | Examiner |
|---|---|---|
| The Hague | 10 August 2023 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 1123**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-08-2023**

| Patent document cited in search report | Publication date | Patent family member(s) | Publication date |
|---|---|---|---|
| US 2021383158 A1 | 09-12-2021 | NONE | |